# EUROPÄISCHE PATENTSCHRIFT

(11) **EP 2 428 533 B1**
(45) Veröffentlichungstag und Bekanntmachung des Hinweises auf die Patenterteilung: **10.09.2014**
(21) Anmeldenummer: 11181126.1
(22) Anmeldetag: 13.09.2011
(51) Int. Cl.: C08K 3/34

(54) **Füllstoff**
Filling material
Matière de remplissage

(30) Priorität: 14.09.2010 AT 15282010
(43) Veröffentlichungstag der Anmeldung: 14.03.2012
(73) Patentinhaber: Paltentaler Minerals GmbH & Co KG, 8903 Lassing bei Selzthal (AT)
(72) Erfinder: Römer, Andreas, 2620 Hafning (AT)
(74) Vertreter: Burger, Hannes

(56) Entgegenhaltungen:
- EP-A1- 2 000 213

## Beschreibung

Die Erfindung betrifft einen mineralischen Füllstoff aus einem Talk mit Talkteilchen, die einen Durchmesser d innerhalb eines Korngrößenspektrums aufweisen, wobei 20 % der Talkteilchen einen maximalen Durchmesser d-20% und 50 % der Talkteilchen einen maximalen Durchmesser d-50% aufweisen, sowie die Verwendung des Füllstoffes.

Talk bzw. Talkum (Mg₃Si₄O₁₀(OH)₂) findet aufgrund seiner besonderen Eigenschaften, wie z.B. die Weichheit, die chemische Beständigkeit, etc., und nicht zuletzt weil Talk als Mineral relativ häufig vorkommt und damit gut verfügbar ist, breite Anwendung als Füllstoff in verschiedenen Formulierungen, wie z.B. für medizinische und kosmetische Zwecke, in Kunststoffen, in der Farben- und Lackindustrie, in der Papierindustrie, oder für Bindemittelsysteme und Spachtelmassen.

In der Putzanwendung bzw. in der Anwendung für Farben und Lacke treten häufig feine Risse und insbesondere bei Putzen das Phänomen der so genannten "Pinholes" auf. Diese Effekte sind oft Auslöser für Beanstandungen und damit verbundene kostenintensive Sanierungen bzw. Überarbeitungen.

Die Auslöser für diese Probleme sind sehr vielfältig und begründen sich meist in einer Kombination aus verschiedenen Ursachen, wie z.B. schlechte Witterungsbedingungen (direkte Sonneneinstrahlung, etc.) oder unzureichende Untergrundbedingungen (mangelhafte Ausführung, unterschiedliches Saugverhalten, usw.).

Neben den klassischen Verarbeitungs- und Witterungsproblemen können aber auch rezepturbedingte Effekte, wie z.B. Additive - Oberflächenspannungen, Benetzungsprobleme, Auslöser für diese Phänomene sein.

Die Aufgabe vorliegender Erfindung besteht darin, eine Lösung zur Verbesserung des geschilderten "Pinhole"-Effektes bzw. eine Möglichkeit zur Reduktion der Rissbildung anzugeben.

Gelöst wird diese Aufgabe durch den einleitend genannten Füllstoff, bei dem ein Steilheitsfaktor der Korngrößenverteilung, der durch den Quotienten d-50%/d-20% definiert ist, einen Wert von maximal 2,3, insbesondere 2,2, aufweist, sowie durch die Verwendung dieses Füllstoffes in einer Spachtelmasse, insbesondere auf Gips- oder Zementbasis oder auf Basis eines organischen Bindemittels, oder einem Putz oder einem Lack oder einer Farbe oder einem Kunststoff oder einem Korrosionsschutzsystem.

Durch die Verringerung des Feinanteils des Füllstoffes konnte eine deutliche Reduktion des genannten "Pinhole"-Effektes in Bindemittelsystemen, wie z.B. Putzen, also Systemen, die im Wesentlichen dünn auf einem Untergrund aufgetragen werden, erreicht werden. Weiterführende Untersuchungen in der Anwendung des feinstoffreduzierten Talks haben gezeigt, dass sich die Plättchen - Talk gehört in die Klasse der Schichtsilikate und weist eine ausgeprägte Plättchenstruktur auf - im Bereich der "Pinholes" schichtartig ablagern, wodurch diese "Pinholes", also beispielsweise der Bereich zwischen zwei Körnern eines Putzes, abgedeckt bzw. durch die Talkplättchen überbrückt werden. Zudem zeigt dieser Talk in der Anwendung als Füllstoff eine deutliche Minimierung des Schwundverhaltens und der Rissbildung von Putzen, Lacken, Farben, Korrosionsschutzsystemen beim Trocknen sowie in der Verarbeitung von Kunststoffen. Als zusätzliche positive Nebeneffekte konnte die Möglichkeit der Titandioxidreduktion, das ein übliches Weißpigment ist, in den genannten Systemen beobachtet werden, da der erfindungsgemäße Füllstoff einen hohen Weißgrad von bis zu 93 %, gemessen mit einer Konica-Minolta FMY, aufweist. Zudem wurde eine homogenere Verteilung des Tintandioxides in diesem Systemen beobachtet. Aufgrund des hohen Weißgrades und durch den Effekt der Überbrückung durch die Talkplättchen ist auch eine bessere Überdeckung von Putzkörnern in Putzen erzielbar, wodurch "dunkle" Putzkörner, auch durch die höhere Deckkraft, bereits mit einem einmaligen Auftrag einer Farbe besser abgedeckt werden, damit also eine Arbeitsersparnis erreicht werden kann. Die hohe Deckkraft ist ebenfalls von Vorteil, wenn der Untergrund durch eine dunkle, z.B. zementäre, graue, Spachtelmasse gebildet wird. In eingefärbten Putzsystemen kann eine Verbesserung der Farbbrillianz bzw. der Farbtonstärke erreicht werden, die um bis zu 25 % höher liegen kann als bei vergleichbaren Putzsystemen nach dem Stand der Technik.. Darüberhinaus ergeben sich aus der lamellaren Struktur des Talks aufgrund des reduzierten Feinanteils auch Verbesserungen in Hinblick auf die Verarbeitungseigenschaften von Putzen, beispielsweise reduzierte Pumpendrücke bei der maschinellen Verarbeitung, höhere Elastizität des Putzes, und kann darüber hinaus der Anteil an organischen Putz-Modifizierern reduziert werden bzw. diese zur Gänze durch den Füllstoff ausgetauscht werden. Durch den reduzierten Feinanteil des Füllstoffes kann auch eine sichtbare "Glättung" der Putzoberfläche nach dem Verarbeiten und Trocknen erreicht werden, wodurch die Verschmutzungsneigung reduziert werden kann. Der Füllstoff bewirkt in Spachtelmassen auf Basis von Gips-, Zement- oder organischen Bindemitteln aufgrund des reduzierten Feinanteils und der Plättchenstruktur eine höhere Elastizität und verbesserte Verarbeitungs- und Schleifbarkeitseigenschaften. Zudem kann der Füllstoff als Mattierungsmittel in Innen- und Außenfarben verwendet werden. Es ist weiters von Vorteil, dass mit dem Füllstoff durch die Reduktion des Feinanteils die so genannte Ölzahl, die ein Maß für das Dispergierverhalten ist, reduziert werden, wodurch die Einmischung des Füllstoffes in die diversen voranstehend genannten Mischungen, also beispielsweise in Putzsystemen oder Farben oder Lacken, verbessert werden kann. Die Reduktion der Ölzahl kann dabei um bis zu 10 % betragen, bezogen auf einen gemahlenen Talk ohne Feinanteilreduktion. Durch die Reduktion der Ölzahl ist eine Reduktion der Bindemittelmenge oder bei gleicher Bindemittelmenge eine höhere Festigkeit erreichbar.

Aufgrund der Schwierigkeiten der Vermessung der Korngröße von plättchenförmigen Substanzen mittels Lasertechnik, wie dies dem Fachmann bekannt ist, sind sämtliche im Folgenden angegebenen Werte zu Durchmesseren der Füllstoffteilchen, sofern nicht anders angegeben, mit einer Meßungenauigkeit von ± 10% zu lesen.

Gemäß einer Ausführungsvariante des Füllstoffes ist vorgesehen, dass der Durchmesser der Talkteilchen innerhalb eines Korngrößenspektrums von 10 µm, insbesondere 20 µm, bis 150 µm, insbesondere 120 µm, liegt. Es werden damit durch die Eingrenzung des Kornbandes, d.h. der Sieblinie, auf Korngrößen die zumindest 10 µm und maximal 150 µm betragen, weiter verbessert, in dem der Fein- bzw. Feinstanteil an Talkteilchen zumindest annähernd vollständig reduziert wird. Durch die Einhaltung einer Maximalkorngröße wird erreicht, dass die Talkteilchen bessere "Fließeigenschaten" aufweisen, wodurch die Überdeckung von Rissen und "Pinholes" durch die Ausbildung einer Talkteilchenschicht verbessert werden kann.

In Putzen bzw. in Spachtelmassen, also Systemen die in der Regel eine Trockenfilmschichtstärke zwischen 0,01 mm und 3 mm bis 4 mm aufweisen, wurde gefunden, dass es von Vorteil ist, gröbere Talkteilchen zu verwenden, wobei zumindest 98 %, insbesondere zumindest 99 %, der Talkteilchen eine Korngröße d zwischen 40 µm, insbesondere 60 µm, und 150 µm, insbesondere 120 µm, aufweisen.

Für dünne Beschichtungen, wie z.B. Farben oder Lacke oder Korrosionsschutzsystemen, hat sich gezeigt, dass es von Vorteil ist, wenn Talkteilchen verwendet werden, die in einem engen Korngrößenbereich liegen, wobei zumindest 98 %, insbesondere zumindest 99 %, der Talkteilchen eine Korngröße d zwischen 10 µm, insbesondere 20 µm, und 80 µm, insbesondere 60 µm, aufweisen, also die Talkteilchen nach oben bzgl. einer oberen Korngrenze und nach unten bezüglich einer unteren Korngrenze klassiert werden.

Es sei in diesem Zusammenhang erwähnt, dass im Rahmen der Erfindung unter dem Ausdruck "dünne Schicht" eine Trockenfilmschichtstärke von maximal 500 µm verstanden wird.

Der Füllstoff wird bevorzugt aus einem natürlichen Talk hergestellt. Je nach Lagerstätte weisen diese unterschiedliche hohe Anteile an Begleitmineralien auf. Zur Verbesserung der voranstehend genannten Effekte ist es dabei von Vorteil, wenn ein natürlicher, mineralischer Talk verwendet wird, dessen Talkanteil mindestens 80 Gew.-%, insbesondere mindestens 90 Gew.-%, beträgt.

Gemäß einer Ausführungsvariante der erfindungsgemäßen Verwendungen ist vorgesehen, dass der Füllstoff dem jeweiligen System in einem Anteil zugesetzt wird, der ausgewählt ist aus einem Bereich mit einer unteren Grenze von 1 Gew.-%, insbesondere 3 Gew.-%, und einer oberen Grenze von 8 Gew.-%, vorzugsweise 6 Gew.-%, insbesondere 4 Gew.-%. Unterhalb von 1 Gew.-% können die voranstehend genannten Effekte zwar beobachtet werden, allerdings nicht im gewünschten Ausmaß. Bei einem Anteil von mehr als 8 Gew.-% konnte keine wesentliche Verbesserung dieser Effekte beobachtet werden. Eine weitere Erhöhung des Füllstoffanteils hätte in der Folge - abhängig vom System, in dem der Füllstoff verwendet wird - "nur" mehr Kostenvorteile, die allerdings durch die zusätzliche Behandlung des Füllstoffes zur Erreichung der gewünschten Korngrößenverteilung, nicht in einem Ausmaß realisiert werden können, die bei Verwendung von normalem, gemahlenem Talk erwartet werden können.

Es ist auch möglich, den erfindungsgemäßen Füllstoff mit herkömmlichen, gemahlenem Talk zu vermischen, wobei ein Anteil dieses nicht feinstoffreduzierten Talks an dem erfindungsgemäßen Füllstoff bis zu maximal 30 Gew.-% betragen kann.

Es sei an dieser Stelle erwähnt, dass unter einem herkömmlichen Talk ein Talk verstanden wird, dessen Talkteilchen Korngrößen aufweisen, die innerhalb eines Korngrößenspektrums bzw. Korngrößenbandes mit einem Steilheitsfaktor d-50%/d-20% von größer 2,3 liegen.

Zum besseren Verständnis der Erfindung wird diese anhand der nachfolgenden Figuren näher erläutert.

Es zeigen jeweils in schematisch vereinfachter Darstellung:
- Fig. 1: die Korngrößenverteilung eines Talks nach dem Stand der Technik mit einem oberen Schnitt (d-98%) bei 60 µm;
- Fig. 2: die Korngrößenverteilung des Talks nach Fig. 1 nach der Reduktion des Feinanteiles;
- Fig. 3: die Korngrößenverteilung eines Talks nach dem Stand der Technik mit einem oberen Schnitt (d-98%) bei 120 µm;
- Fig. 4: die Korngrößenverteilung des Talks nach Fig. 3 nach der Reduktion des Feinanteiles;
- Fig. 5: einen Ausschnitt aus einer Putzschicht nach dem Stand der Technik in Draufsicht;
- Fig. 6: einen Ausschnitt aus einer mit dem erfindungsgemäßen Füllstoff versehenen Putzschicht in Draufsicht;
- Fig. 7: eine schematische Darstellung der Reduzierung des "Pinhole"-Effektes.

Einführend sei festgehalten, dass Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Es sei an dieser Stelle darauf hingewiesen, dass mit "Korngröße" im Sinne der Erfindung die jeweils größte Abmessung eines Teilchens (Länge, Breite oder Dicke) gemeint ist.

Zur Herstellung des erfindungsgemäßen Füllstoffes wird ein natürlicher Talk verwendet, der vorzugsweise eine Reinheit an Mg₃Si₄O₁₀(OH)₂ von mindestens 80 Gew.-%, insbesondere mindestens 90 Gew.-%, aufweist, d.h. dass der Anteil an Verunreinigungen aus der Talkgenese, wie beispielsweise CaCO₃, maximal 20 Gew.- % beträgt. Es sei jedoch darauf hingewiesen, dass prinzipiell auch ein Talk mit einer geringeren Reinheit verwendet werden kann, auch wenn dabei zu erwarten ist, dass die voranstehend genannten Effekte nur in einem geringeren Ausmaß realisiert werden können.

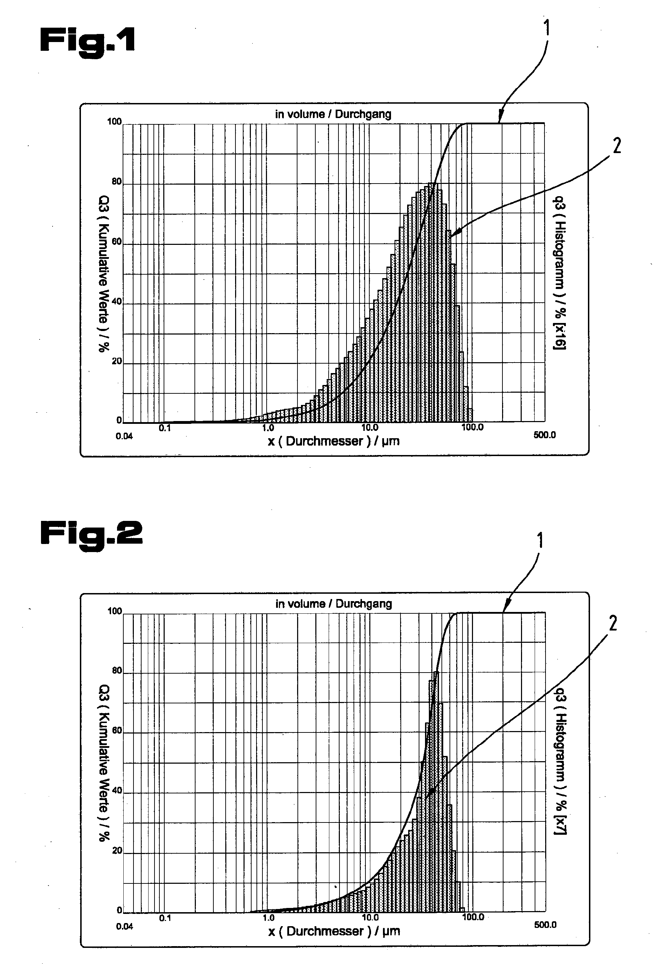

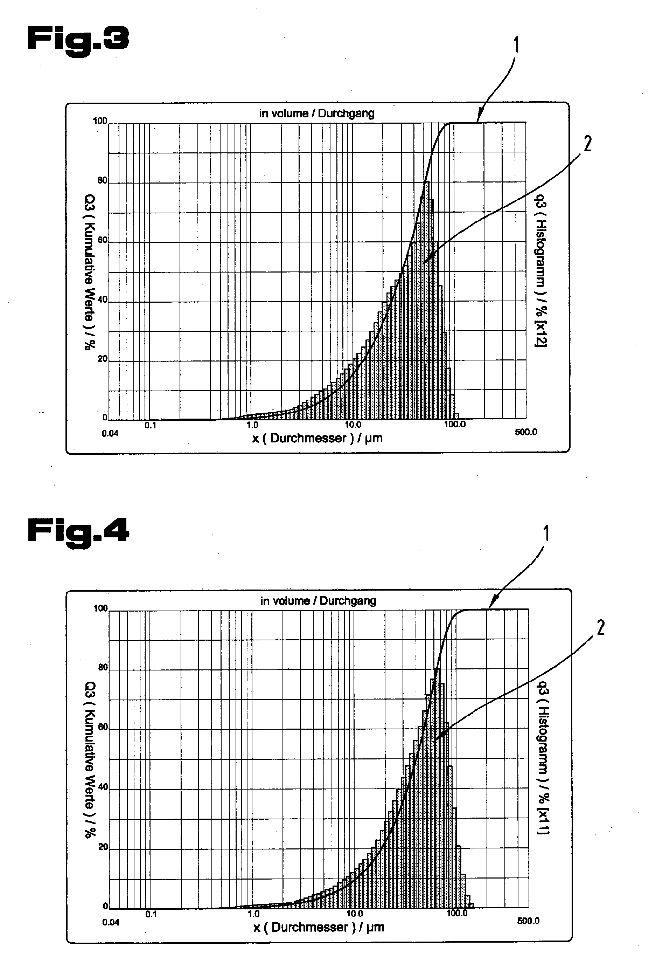

Zur Vorbereitung wird der Talk nach den üblichen, aus dem Stand der Technik zur Talkherstellung bekannten Aufbereitungsmethoden verarbeitet, insbesondere gemahlen. Bei diesem Mahlschritt entsteht ein Produkt, dass ein sehr breites Kornband mit einer unterschiedlichen Verteilung der dadurch entstanden Korngrößen aufweist. In den Fig. 1 und 3 sind dazu die Korngrößenverteilungen von zwei Talksorten nach dem Stand der Technik dargestellt, mit einem oberen Schnitt bei 60 µm (Fig. 1) bzw. 120 µm (Fig. 3).

Mit dem Ausdruck "oberer Schnitt" ist gemeint, dass 98 % der Talkteilchen einen maximalen Durchmesser von 60 µm bzw. 120 µm aufweisen.

Dargestellt sind einerseits durch jeweils eine Linie 1 die Korngrößenverteilungskurven und andererseits jeweils ein zugehöriges Histogramm 2 der Verteilung.

Die Korngrößenmessung wurde mit einem CILAS 1064 mittels Lasertechnik gemessen. Tabelle 1 gibt dazu die Parameter der Messung an.

**Tabelle 1: Parameter der Korngrößenmessung**

| | |
|---|---|
| Flüssigkeit | Wasser |
| Dispergiermittel | Tensid (Pril^{®}), 0,1 % |
| Ultraschall | 60 s (+M)¹ |
| Konzentration² | 159 (Fig.1) |
| | 170 (Fig. 2) |
| | 166 (Fig. 3) |
| | 150 (Fig. 4) |
| Fraunhofer | |
| Verdünnung | nein |
| Mess-/Spülzeiten | 20/20/3 |
| Messbereich | 0,04 µm - 500,00 µm |
| Klassen | 100 |

| | |
|---|---|
| ¹ + M bedeutet die Messzeit, bei der das Ultraschall weiter läuft. Dies ist in der Regel immer konstant ² Diese Werte sind ohne Einheit. Sie bezeichnen einen Wert, der in der Messküvette mittels Laser abgelesen wird und anschließend in die herstellerabhängigen Berechnungen mit einfließt. | |

Wie aus den Fig. 1 und 3 deutlich ersichtlich ist, entsteht durch die Mahlung jeweils ein Produkt, dass einen sehr hohen Feinanteil aufweist. Die jeweiligen Messwerte der Korngrößenverteilung sind in Tabelle 2 wiedergegeben.

**Tabelle 2: Messwerte der Korngrößenverteilung zu den Messungen entsprechend den Fig. 1 bis 4; Einheiten wie in den Fig. angegeben.**

| | Fig.1 | Fig.2 | Fig.3 | Fig.4 |
|---|---|---|---|---|
| X [µm] | Q3 | Q3 | Q3 | Q3 |
| 0,04 | 0,00 | 0,00 | 0,00 | 0,00 |
| 0,10 | 0,00 | 0,00 | 0,00 | 0,00 |
| 0,30 | 0,18 | 0,00 | 0,06 | 0,00 |
| 0,50 | 0,33 | 0,00 | 0,12 | 0,02 |
| 0,70 | 0,54 | 0,00 | 0,23 | 0,11 |
| 1,00 | 1,00 | 0,27 | 0,58 | 0,36 |
| 2,00 | 2,73 | 1,24 | 1,88 | 1,21 |
| 3,00 | 4,39 | 2,25 | 3,13 | 1,97 |
| 5,00 | 8,94 | 4,62 | 6,46 | 3,96 |
| 7,00 | 13,70 | 7,04 | 9,97 | 6,10 |
| 10,00 | 20,85 | 10,63 | 15,33 | 9,56 |
| 15,00 | 32,29 | 17,91 | 24,18 | 15,65 |
| 25,00 | 53,03 | 34,10 | 41,68 | 29,08 |
| 36,00 | 70,68 | 57,23 | 58,00 | 44,22 |
| 45,00 | 81,80 | 80,63 | 70,65 | 56,20 |
| 63,00 | 95,50 | 98,68 | 91,82 | 78,78 |
| 90,00 | 100,00 | 100,00 | 99,78 | 96,49 |
| 125,00 | 100,00 | 100,00 | 100,00 | 99,95 |
| 250,00 | 100,00 | 100,00 | 100,00 | 100,00 |
| 500,00 | 100,00 | 100,00 | 100,00 | 100,00 |
| d-20% [µm] | 9,63 | 16,27 | 12,62 | 18,35 |
| d-50% [µm] | 23,40 | 33,12 | 30,39 | 40,30 |
| d-90% [µm] | 53,89 | 50,74 | 60,70 | 75,69 |

Das Mahlen selbst kann beispielsweise mit Kugel- oder Rührwerkkugelmühlen erfolgen. Selbstverständlich sind auch andere, gebräuchliche Aufbereitungsanlagen, wie z.B. Luftstrahlmühlen, verwendbar.

Die Rohprodukte nach dem Mahlen bestehen aus Talkteilchen, die einen Durchmesser d-50% aufweisen der maximal 23,40 µm für den Talk nach Fig. 1 und maximal 30,39 µm für den Talk nach Fig. 3 beträgt.

Mit d-50% Wert in Hinblick auf das Korngrößenspektrum ist entsprechend dem allgemeinen Gebrauch gemeint, dass 50 % der Talkteilchen einen Durchmesser d aufweisen, der kleiner als der oder gleich dem angegebene(n) Wert ist.

Weiters weisen die Rohprodukte einen Durchmesser d-20% auf, der maximal 9,63 µm für den Talk nach Fig. 1 und maximal 12,62 µm für den Talk nach Fig. 3 beträgt.

Daraus ergibt sich für den Steilheitsfaktor d-50%/d-20% ein Wert von 2,43 für den Talk nach Fig. 1 und 2,41 für den Talk nach Fig. 3.Erfindungsgemäß wird der Talk nach dem Mahlen nach dem Kriterium der Partikelgröße klassiert, gegebenenfalls nach einem Trocknungsschritt, der beispielsweise durchgeführt werden kann, falls der Talk nass gemahlen wird. Das Klassieren erfolgt vorzugsweise durch Sichten, insbesondere Windsichten. Es können aber auch andere Klassierverfahren, wie beispielsweise Nassstromklassieren, etc. angewandt werden. Zur Erhöhung der Reinheit kann des Talks kann vor dem Klassieren ein Sortierverfahren durchgeführt werden, beispielsweise ein Flotationsverfahren, falls dies erforderlich ist.

Durch das Klassieren, insbesondere das Sichten, wird ein mineralischer Füllstoff aus dem Talk erzeugt, der im Vergleich mit dem gemahlenen Rohprodukt einen deutlich geringeren Feinanteil aufweist. Insbesondere wird der Feinanteil um 25 %, insbesondere 30 %, bis 30%, insbesondere 40 %, bezogen auf den Feinanteil des gesamten Korngrößenbandes reduziert.

Zur besseren optischen Veranschaulichung zeigen dazu die Fig. 2 und 4 die Korngrößenverteilung des Talks nach den Fig. 1 und 3 nach dem Sichten. Dargestellt ist wiederum mit der Linie 1 die die Korngrößenverteilungskurve und mit dem Histogramm 2 die zugehörige Durchmesserverteilung der Talkteilchen.

Aus dem Vergleich der beiden Histogramme 2 ist erkennbar, dass der Feinanteil deutlich reduziert wurde. Dies kommt auch durch die steileren Sieblinien in den Fig. 2 und 4 zum Ausdruck. Der Steilheitsfaktor für den Talk nach Fig. 2 beträgt 2,04, jener für den Talk nach Fig. 4 2,2.

Es sei an dieser Stelle erwähnt, dass die Fig. 1 bis 4 nur einen beispielhaften Charakter zu besseren Veranschaulichung der Erfindung haben.

Generell gilt, dass ein Füllstoff nach der Erfindung einen Steilheitsfaktor d-50%/d-20% von kleiner oder gleich 2,3, insbesondere 2,2, aufweist. Mit anderen Worten ausgedrückt weist der erfindungsgemäße Füllstoff eine relativ steile Korngrößenverteilungskurve auf. Gemäß einer Ausführungsvariante wird das Klassieren so durchgeführt, dass der Durchmesser der Talkteilchen innerhalb eines Korngrößenspektrums von 10 µm, insbesondere 20 µm, bis 150 µm, insbesondere 120 µm, liegt.

Im Folgenden wird jeweils ein Ausführungsbeispiel der erfindungsgemäßen Verwendung des mineralischen Füllstoffes auf Talkbasis beschrieben.

### Beispiel 1: Putzanwendung

In einen Kunstharzputz 2 mm Kratz werden 4 Gew.-% des erfindungsgemäßen mineralischen Füllstoffes eingemischt. Der Putz besteht neben dem Füllstoff noch aus 10,46 Gew.-% Wasser, 11,00 Gew.-% Bindemittel, 32,00 Gew.-% Dolomitmehl, 38,70 Gew.-% Calcit, 1,5 Gew.-% Titandioxid und 2,34 Gew.-% übliche Hilfsstoffe, wie Wasserenthärter, Verdicker, Dispergiermittel, Fasern, Konservierungsmittel, Entschäumer, Hydrophobierungsmittel. Die Talkteilchen weisen dabei eine Korngrößenverteilung auf, bei der zumindest 98 %, insbesondere zumindest 99 %, der Talkteilchen eine Korngröße d zwischen 40 µm, insbesondere 60 µm, und 150 µm, insbesondere 120 µm, aufweisen.

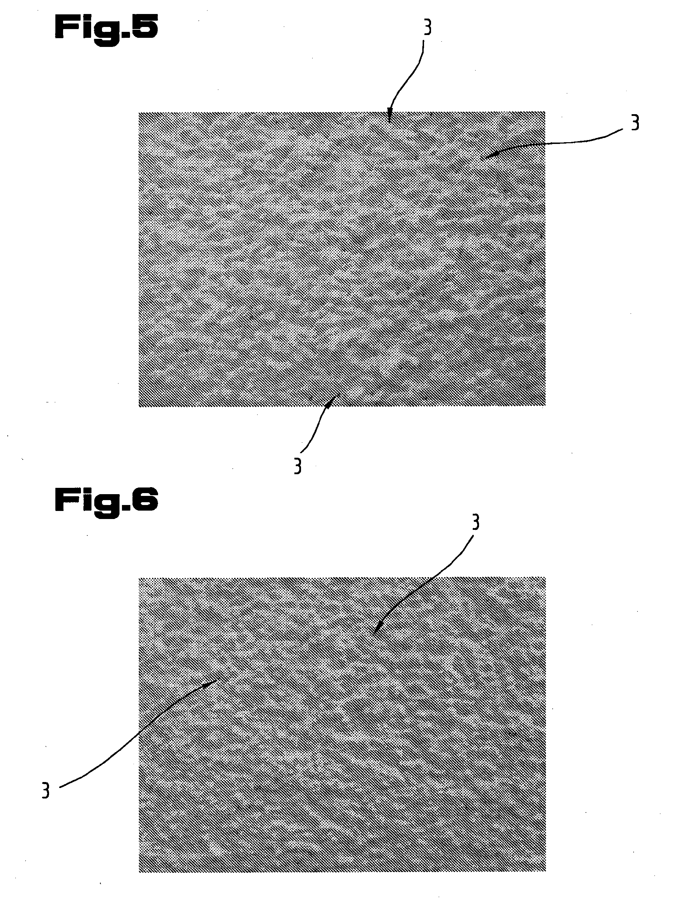

Die Fig. 5 und 6 zeigen dazu Ausschnitte aus dem fertigen Außenputz, wobei in Fig. 5 der Putz ohne und in Fig.6 der Putz mit dem erfindungsgemäßen Füllstoff gezeigt ist. Im Putz ohne den erfindungsgemäßen Füllstoff ist der Anteil an Dolomitmehl und Calcit dementsprechend höher.

In Fig. 5 sind Pinholes 3 deutlich als schwarze Punkte zu erkennen. Durch den Zusatz des erfindungsgemäßen Füllstoffes konnte das Ausmaß dieser Pinhole-Bildung deutlich reduziert werden, wie dies Fig. 6 zeigt. Es treten nur mehr vereinzelt derartige Pinholes 3 auf. Durch das Auszählen der Pinholes 3 an 30 Proben konnte eine Reduktion der Pinholes um annähernd 100 % durch den Zusatz des Talks mit dem reduzierten Feinanteil bestimmt werden.

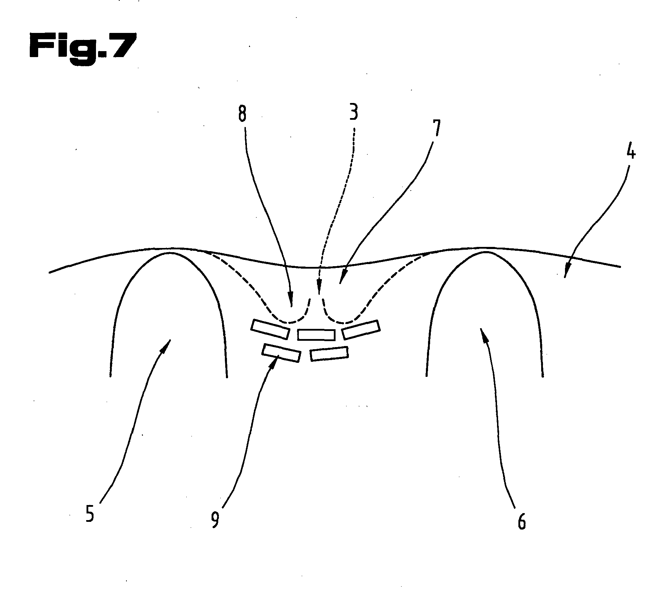

Die Bildung der Pinholes 3 hat verschiedenste Ursachen, die in der Wasserverdunstungszeit während des Trocknens des Putzes, der Luftblasenbildung, der Oberflächenspannung, etc. begründet sind. In Fig. 7 ist dazu die Bildung der Pinholes 3 schematisch anhand eines Außenputzes 4 gezeigt. Der Putz weist Putzkörner 5, 6 auf über die sich im nassen Zustand des Außenputzes 4 eine Putzschicht 7 legt. Durch das Verdunsten des Dispersionsmittels fällt ein Bereich 8 zwischen den Putzkörnern 5, 6 so weit ein, dass aufgrund der auftretenden Spannungen die Putzschicht 7 unter Ausbildung eines nadelförmigen Loches, des Pinholes 3, einreißt. Der erfindungsgemäße Füllstoff weist nun ein sehr enges Kornspektrum an Talkplättchen 9 auf, die sich in der Putzschicht 7 geschichtet anordnen und damit ein Art Armierung für die Putzschicht 7 bilden, wodurch die Bildung der Pinholes 3 deutlich reduziert werden kann. Durch den erfindungsgemäßen Füllstoff wird zudem der Effekt erreicht, dass weniger Netzmittel benötigt wird, wodurch eine geringere Oberflächenstörung erreicht wird.

Generell sei darauf hingewiesen, dass sich die Talkplättchen 9 aufgrund der ausgeprägten Schichtstruktur des Talks bei sämtlichen Ausführungsvarianten der Erfindung zumindest Großteils, d.h. in einem Ausmaß von bis zu 95 %, bezogen auf die Gesamtheit der Talkteilchen, geschichtet in ein oder mehreren übereinander angeordneten Schichten, beispielsweise zwei, drei, vier, etc. anordnen.

Der erfindungsgemäße Füllstoff kann auch für andere Putzsysteme, insbesondere Außenputze, beispielsweise Silikonharzputze, Wasserglasputze, zementgebundene Putze, und auch für anderen Körnungen, insbesondere Körnungen von 0,5 mm bis 4 mm, verwendet werden.

Des Weiteren ist der Anteil an dem Füllstoff auf Talkbasis an dem jeweiligen System, d.h. der jeweiligen Anwendung, bei sämtlichen Ausführungsvarianten der Erfindung, also auch bei den im Folgenden beschriebnen, nicht auf 4 Gew.-% beschränkt, sondern kann zwischen 1 Gew.-% und 8 Gew.-% bzw. den voranstehend genannten Bereichen, bezogen auf die jeweilige Gesamtmasse des Systems betragen. Im Bereich zwischen 3 Gew.-% und 4 Gew.-% wurde jedoch ein Maximum in der Reduktion der Pinholes 3 sowie von Rissen, insbesondere Mikrorissen, beobachtet.

Der Füllstoff kann in trockenen und pastösen Putzen verwendet werden.

### Beispiel 2: Farbanwendung

Einer Innenfarbe der Zusammensetzung 35,2 Gew.-% Wasser, 12,50 Gew.-% 55 %-ige Dispersion aus Vinylacetet und Ethylen, 8,5 Gew.-% Weißpigment, 8,0 Gew.-% Kieselsäure, 19 Gew.-% Dolomitmehl, 6,0 Gew.-% Talkum/Dolomit Mischung, 5 Gew.-% Diatomenerde und 1,8 Gew.-% Hilfsstoffe, wie Wasserenthärter, Viskositätsregler, Dispergiermittel, Fasern, Konservierungsmittel, Entschäumer, wurden 4 Gew.-% des erfindungsgemäßen mineralischen Füllstoffes eingemischt. Die Talkteilchen weisen dabei eine Korngrößenverteilung auf, bei der zumindest 98 %, insbesondere 99 %, der Talkteilchen eine Korngröße d zwischen 10 µm, insbesondere 20 µm, und 80 µm, insbesondere 60 µm, aufweisen.

Im Vergleich zu einer Farbe ohne den erfindungsgemäßen Füllstoff wurde eine deutliche Reduktion an Rissen bei vergleichbarer Trockenfilmstärke erreicht.

### Beispiel 3: Korrosionsschutzanwendung

Einer Schiffsrostschutzfarbe der Zusammensetzung 5,19 Gew.-% Lösungsmittel, 20,60 Gew.-% Polyol, 16,01 Gew.-% Pigmente, 18,25 Gew.-% Schwerspat, 19,11 Gew.-% Dolomitmehl, 3,4 Gew.-% Isocyanat, 11,44 Gew.-% Hilfsstoffe, wie Dispergier- und Netzmittel, Wachse, Katalysatoren, wurden 6 Gew.-% des erfindungsgemäßen mineralischen Füllstoffes eingemischt. Die Talkteilchen weisen dabei eine Korngrößenverteilung auf, bei der zumindest 98 %, insbesondere 99 %, der Talkteilchen eine Korngröße d zwischen 10 µm, insbesondere 20 µm, und 80 µm, insbesondere 60 µm, aufweisen.

Im Vergleich zu einer Farbe ohne den erfindungsgemäßen Füllstoff wurde eine deutliche Reduktion an Rissen bei vergleichbarer Trockenfilmstärke erreicht.

Der Füllstoff hat in Korrosionsschutzsystemen zudem die Wirkung der Verbesserung der Haftfestigkeit des Korrosionsschutzanstriches auf dem jeweiligen Untergrund und der Verbesserung der Salzwasserbeständigkeit.

Bei weiteren Versuchen, bei denen der erfindungsgemäße Füllstoff einer Spachtelmasse, insbesondere auf Gipsbasis oder auf Zementbasis oder auf Basis eines organischen Bindemittels zugesetzt wurde, wurden vergleichbare Ergebnisse erzielt, ebenso bei Kunststoffen, wie insbesondere auf Basis eines PP-Compounds oder auf PMMA-Basis.

In Spachtelmassen wurde durch den Einsatz des Füllstoffes zudem eine Verbesserung der Schleifbarkeit beobachtet.

Der Füllstoff hat in Kunststoffen zudem die Wirkung der Verbesserung des Steifigkeits-/Schlagzähigkeitsverhältnisses, der Verbesserung der Fließnahtfestigkeit, der Verbesserung der Oberflächenqualität sowie der Verbesserung des Abrasionswiderstandes.

Die Ausführungsbeispiele beschreiben mögliche Ausführungsvarianten des Füllstoffes sowie der Verwendung des Füllstoffes, wobei an dieser Stelle bemerkt sei, dass die Erfindung nicht auf die speziell dargestellten Ausführungsvarianten derselben eingeschränkt ist.

### Bezugszeichenaufstellung

- 1: Linie
- 2: Histogramm
- 3: Pinhole
- 4: Außenputz
- 5: Putzkorn
- 6: Putzkorn
- 7: Putzschicht
- 8: Bereich
- 9: Talkplättchen

## Patentansprüche

1. Mineralischer Füllstoff, insbesondere für einen Putz oder einen Lack oder eine Farbe oder einen Kunststoff oder eine Spachtelmasse, aus einem Talk mit Talkteilchen, die einen Durchmesser d innerhalb eines Korngrößenspektrums aufweisen, wobei 20 % der Talkteilchen einen maximalen Durchmesser d-20% und 50 % der Talkteilchen einen maximalen Durchmesser d-50% aufweisen, wobei ein Steilheitsfaktor der Korngrößenverteilung, der durch den Quotienten d-50%/d-20% definiert ist, einen Wert von maximal 2,3, insbesondere 2,2, aufweist, **dadurch gekennzeichnet, dass** zumindest 98 % der Talkteilchen eine Korngröße d zwischen 10 µm ± 10% und 100 µm ± 10% oder dass zumindest 98 % der Talkteilchen eine Korngröße d zwischen 40 µm ± 10% und 150 µm 10% aufweisen.

2. Füllstoff nach Anspruch 1, **dadurch gekennzeichnet, dass** der Durchmesser d der Talkteilchen innerhalb eines Korngrößenspektrums von 10 µm ± 10%, insbesondere 20 µm ± 10%, bis 150 µm ± 10%, insbesondere 120 µm ± 10%, liegt.

3. Füllstoff nach Anspruch 1 oder 2, **dadurch gekennzeichnet, dass** zumindest 98 % der Talkteilchen eine Korngröße d zwischen 20 µm ± 10% und 80 µm ± 10%, aufweisen.

4. Füllstoff nach einem der Ansprüche 1 oder 2, **dadurch gekennzeichnet, dass** zumindest 98 % der Talkteilchen eine Korngröße d zwischen 60 µm ± 10% und 120 µm ± 10%, aufweisen.

5. Füllstoff nach einem der Ansprüche 1 oder 2, **dadurch gekennzeichnet, dass** zumindest 98 % der Talkteilchen eine Korngröße d zwischen 10 µm ± 10%, insbesondere 20 µm ± 10%, und 80 µm 10%, insbesondere 60 µm ± 10%, aufweisen.

6. Füllstoff nach einem der Ansprüche 1 bis 5, **dadurch gekennzeichnet, dass** der Talkanteil mindestens 80 Gew.-%, insbesondere mindestens 90 Gew.-%, beträgt.

7. Verwendung des Füllstoffes nach einem der Ansprüche 1 bis 6 in einer Spachtelmasse.

8. Verwendung des Füllstoffes nach einem der Ansprüche 1 bis 6 in einem Putz.

9. Verwendung des Füllstoffes nach einem der Ansprüche 1 bis 6 in einem Lack oder einer Farbe.

10. Verwendung des Füllstoffes nach einem der Ansprüche 1 bis 6 in einem Kunststoff.

11. Verwendung des Füllstoffes nach einem der Ansprüche 1 bis 6 in einem Korrosionsschutzsystem.

12. Verwendung nach einem der Ansprüche 7 bis 11, **dadurch gekennzeichnet, dass** der Füllstoff in einem Anteil zugesetzt wird, der ausgewählt ist aus einem Bereich mit einer unteren Grenze von 1 Gew.-% und einer oberen Grenze von 8 Gew.-%.

## Claims

1. Mineral filling material, in particular for a plaster or a lacquer or a paint or a plastic material or a filler, made of a talc comprising talc particles having a diameter d within a grain size spectrum, where 20% of the talc particles exhibit a maximum diameter d-20%, and 50% of the talc particles exhibit a maximum diameter of d-50%, and a steepness factor of the particle size distribution which is defined by the quotient d-50%/d-20% has a maximum value of 2.3, in particular 2.2, **characterized in that** at least 98% of the talc particles have a grain size d between 10µm ± 10% and 100 µm ± 10%, or that at least 98% of the talc particles have a grain size d between 40 µm ± 10% and 150 µm ± 10%.

2. Filing material according to claim 1, **characterized in that** the diameter d of the talc particles is within a grain size spectrum of 10 µm ± 10%, in particular 20 µm ± 10%, to 150 µm ± 10%, in particular 120 µm ± 10%.

3. Filling material according to claim 1 or 2, **characterized in that** at least 98% of the talc particles have a grain size d of between 20 µm ± 10% and 80 µm ± 10%.

4. Filling material according to claim 1 or 2, **characterized in that** at least 98% of the talc particles have a grain size d of between 60 µm ± 10% and 120 µm ± 10%.

5. Filling material according to claim 1 or 2, **characterized in that** at least 98% of the talc particles have a grain size d of between 10 µm ± 10%, in particular 20 µm ± 10%, and 80 µm ± 10%, in particular 60 µm ± 10%.

6. Filling material according to one of claims 1 to 5, **characterized in that** the portion of talc is at least 80% by weight, in particular at least 90% by weight.

7. Use of the filling material according to one of claims 1 to 6 in a filler.

8. Use of the filling material according to one of claims 1 to 6 in a plaster.

9. Use of the filling material according to one of claims 1 to 6 in a lacquer or a paint.

10. Use of the filling material according to one of claims 1 to 6 in a plastic material.

11. Use of the filling material according to one of claims 1 to 6 in an anti-corrosion system.

12. Use according to one of claims 7 to 11, **characterized in that** the filling material is added at a proportion which is selected from a range having a lower limit of 1% by weight and an upper limit of 8% by weight.

## Revendications

1. Matière de charge minérale, en particulier pour un enduit ou un vernis ou une peinture ou une matière plastique ou une masse à spatuler, consistant en un talc comportant des particules de talc qui présentent un diamètre d compris à l'intérieur d'un spectre granulométrique, dans laquelle 20 % des particules de talc ont un diamètre maximal d-20 %, et 50 % des particules de talc ont un diamètre maximal d-50 %, un facteur de pente de la répartition granulométrique, qui est défini par le quotient d-50 %/d-20 %, présentant une valeur maximale de 2,3, en particulier de 2,2, **caractérisée en ce qu'**au moins 98 % des particules de talc présentent une granulométrie d comprise entre 10 µm ± 10 % et 100 µm ± 10 %, ou **en ce qu'**au moins 98 % des particules de talc présentent une granulométrie d comprise entre 40 µm ± 10 % et 150 µm ± 10 %.

2. Matière de charge selon la revendication 1, **caractérisée en ce que** le diamètre d des particules de talc se trouve à l'intérieur d'un spectre granulométrique de 10 µm ± 10 %, en particulier de 20 µm ± 10 %, jusqu'à 150 µm ± 10 %, en particulier de 120 µm ± 10 %.

3. Matière de charge selon la revendication 1 ou 2, **caractérisée en ce qu'**au moins 98 % des particules de talc présentent une granulométrie d comprise entre 20 µm ± 10 % et 80 µm ± 10 %.

4. Matière de charge selon l'une des revendications 1 ou 2, **caractérisée en ce qu'**au moins 98 % des particules de talc présentent une granulométrie d comprise entre 60 µm ± 10 % et 120 µm ± 10 %.

5. Matière de charge selon l'une des revendications 1 ou 2, **caractérisée en ce qu'**au moins 98 % des particules de talc présentent une granulométrie d comprise entre 10 µm ± 10 %, en particulier 20 µm ± 10 %, et 80 µm ± 10 %, en particulier 60 µm ± 10 %.

6. Matière de charge selon l'une des revendications 1 à 5, **caractérisée en ce que** la proportion du talc est d'au moins 80 % en poids, en particulier d'au moins 90 % en poids.

7. Utilisation de la matière de charge selon l'une des revendications 1 à 6 dans une masse à spatuler.

8. Utilisation de la matière de charge selon l'une des revendications 1 à 6 dans un enduit.

9. Utilisation de la matière de charge selon l'une des revendications 1 à 6 dans un vernis ou une peinture.

10. Utilisation de la matière de charge selon l'une des revendications 1 à 6 dans une matière plastique.

11. Utilisation de la matière de charge selon l'une des revendications 1 à 6 dans un système de protection contre la corrosion.

12. Utilisation selon l'une des revendications 7 à 11, **caractérisée en ce que** la matière de charge est ajoutée selon une proportion qui est choisie dans une plage ayant une limite inférieure de 1 % en poids et une limite supérieure de 8 % en poids.
